# EUROPÄISCHE PATENTANMELDUNG

(11) **EP 3 273 386 A1**
(43) Veröffentlichungstag der Anmeldung: **24.01.2018**
(21) Anmeldenummer: 17182092.1
(22) Anmeldetag: 19.07.2017
(51) Int. Cl.: G06K 9/00

(54) **DIGITALES AUTHENTIFIZIERUNGSVERFAHREN**

(30) Priorität: 22.07.2016 DE 102016113560
(71) Anmelder: Geupel, Hermann, 81925 München (DE)
(72) Erfinder: Geupel, Hermann, 81925 München (DE)
(74) Vertreter: Heinze, Ekkehard

(57) **Zusammenfassung**

Digitales Authentifizierungsverfahren zur Authentifizierung einer Person mittels mindestens eines biometrischen Merkmals, durch Vergleich einer gespeicherten Aufzeichnung des Merkmals oder eines aus einer Aufzeichnung abgeleiteten Soll-Parameters, mit einer aktuellen Aufnahme des Merkmals oder einem hieraus abgeleiteten Ist-Parameter, wobei die aktuelle Aufnahme mittels eines Erfassungsgerätes ausgeführt wird, das vor oder während der Aufnahme ein Prüfsignal an das Objekt aussendet, das als die zu authentifizierende Person angenommen wird, und zusammen mit dem oder jedem biometrischen Merkmal des Objekts ein von dem Objekt im Ansprechen auf das Prüfsignal ausgesandtes Ansprechsignal aufnimmt, und das Ansprechsignal mit mindestens einem Soll-Ansprechsignal verglichen und das Vergleichsergebnis zur Authentifizierung verarbeitet wird.

## Beschreibung

Die vorliegende Erfindung beschreibt ein digitales Authentifizierungsverfahren zur Authentifizierung einer Person mittels mindestens eines biometrischen Merkmals, durch Vergleich einer gespeicherten Aufzeichnung des Merkmals oder eines aus einer Aufzeichnung abgeleiteten Soll-Parameters, mit einer aktuellen Aufnahme des Merkmals oder einem hieraus abgeleiteten Ist-Parameter. Insbesondere betrifft sie ein Verfahren zum Schutz eines biometrischen Authentifizierungssystems vor einer Fälschung mittels kopierter Aufnahmen.

Ein biometrisches Authentifizierungssystem lässt sich gewöhnlich dadurch am leichtesten überlisten, indem der Betrüger Kopien der biometrischen Merkmale der authentischen Person vor den Sensor des Erfassungsgerätes bringt. Im Rahmen der Stimmbiometrie können das Tonaufnahmen, im Rahmen der Gesichtsbiometrie Fotos oder Videos sein.

Die klassische Methode, solche Fälschungsangriffe aufzudecken, ist ein sogenanntes Challenge Response Verfahren, wie zum Beispiel in der US 8 508 338 B1 beschrieben. Hier wird der Benutzer zur Lebenderkennung zu bestimmten, für den Benutzer unvorhersehbaren Zeitpunkten aufgefordert, mit dem Auge zu blinzeln, den Finger auf den Sensor zu legen, weiter aufzudrücken, wegzunehmen oder einen Begriff einzusprechen. Der Nachteil solcher Challenge Response Verfahren besteht darin, dass dem Benutzer dabei ein Mehraufwand aufgebürdet wird, der zu Lasten der Nutzerakzeptanz geht.

Der Fachwelt ist mit der US 6 480 825 B1 zur Erkennung von biometrischen Kopien auch die Methode bekannt, eine Art von Wasserzeichen in die biometrische Aufzeichnung einzuarbeiten. Dementsprechend werden während der akustischen Aufzeichnungen eine Reihe von DTMF Tönen an das Telefon des Benutzers übertragen und mit aufgezeichnet. Der Nachteil eines solchen akustischen Wasserzeichens besteht darin, dass es nicht davor schützt, dass ein Betrüger die authentische Person außerhalb des biometrischen Systems ohne Wasserzeichenmarkierung aufzeichnet und die Aufzeichnung im Rahmen einer Authentifizierungssitzung einspielt.

Die vorliegende Erfindung stellt sich die Aufgabe ein Verfahren und eine Vorrichtung aufzuzeigen, das eine biometrische Lebenderkennung auf nutzerfreundliche und zuverlässige Weise vornimmt.

Diese Aufgabe wird in ihrem Verfahrensaspekt gelöst durch ein digitales Authentifizierungsverfahren mit den Merkmalen des Anspruchs 1 und in ihrem Vorrichtungsaspekt durch eine Authentifizierungsanordnung mit den Merkmalen des Anspruchs 8. Zweckmäßige Fortbildungen des Erfindungsgedankens sind Gegenstand der jeweiligen abhängigen Ansprüche.

Die Erfindung löst die Aufgabe insbesondere dadurch, dass das Erfassungsgerät, welches die biometrischen Merkmale eines Objektes erfasst, zusätzlich Signale an dieses aussendet, um die Beschaffenheit des Objektes zu testen, insbesondere, ob das Objekt ein Wiedergabegerät oder ein Mensch ist.

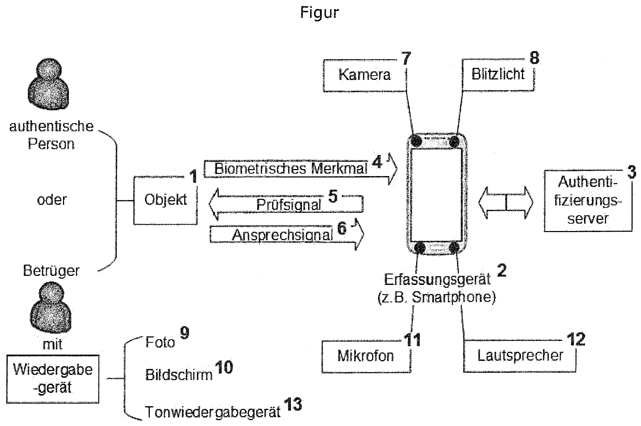

Die einzige Figur zeigt eine beispielhafte Umsetzung der erfindungsgemäßen Idee.

Die Erfindung löst die Aufgabe entsprechend durch ein digitales Authentifizierungsverfahren zur Authentifizierung einer Person mittels mindestens eines biometrischen Merkmals, durch Vergleich einer gespeicherten Aufzeichnung des Merkmals oder eines aus einer Aufzeichnung abgeleiteten Soll-Parameters, mit einer aktuellen Aufnahme des Merkmals oder einem hieraus abgeleiteten Ist-Parameter, wobei
- die aktuelle Aufnahme mittels eines Erfassungsgerätes 2 ausgeführt wird, das vor oder während der Aufnahme ein Prüfsignal 5 an das Objekt 1 aussendet, das als die zu authentifizierende Person angenommen wird,
- und zusammen mit dem oder jedem biometrischen Merkmal des Objekts ein von dem Objekt im Ansprechen auf das Prüfsignal ausgesandtes Ansprechsignal 6 aufnimmt, und
das Ansprechsignal mit mindestens einem Soll-Ansprechsignal verglichen und das Vergleichsergebnis zur Authentifizierung verarbeitet wird.

In einer weiteren Ausführung werden der oder die Zeitpunkte, zu denen das Erfassungsgerät 2 ein Prüfsignal 5 sendet, von einem Authentifizierungsserver 3 bestimmt, mit dem das Erfassungsgerät in einer Kommunikationsbeziehung steht und an den es schließlich das aufgenommene Ansprechsignal 6 zur Verarbeitung schickt.

In einer weiteren Ausführung haben die Zeitpunkte ihren Bezugspunkt im Start der Aufzeichnung des biometrischen Merkmals 4, damit der Authentifizierungsserver 3 das Ansprechsignal 6 in der Aufzeichnung einfacher orten kann.

In einer weiteren Ausführung werden die Prüfsignale nicht nur im Rahmen der Authentifizierung, sondern auch im Rahmen des Enrollments angewendet, um dem Authentifizierungssystem 3 von Anfang an zu lehren, wie Soll-Ansprechsignale im authentischen Fall aussehen können und sollen.

In einer weiteren Ausführung ist das Erfassungsgerät 2 ein Smartphone oder Tablet.

In einer weiteren Ausführung ist das oder ein biometrisches Merkmal 4 ein optisch erfassbares Merkmal, insbesondere das Gesicht, die Retina oder die Papillarstruktur einer Fingerspitze, der Person und das Erfassungsgerät eine Kamera ist, die als Prüfsignal ein Lichtsignal aussendet.

In einer weiteren Ausführung ist das Lichtsignal ein Lichtblitz mit vorbestimmter Ausleuchtungs-Geometrie oder eine Lichtspur mit vorbestimmter zeitlicher Richtungsabhängigkeit der Aussendung eines Lichtflecks.

In einer weiteren Ausführung ist die Kamera 7 die eingebaute Kamera eines Smartphones oder Tablet.

In einer weiteren Ausführung wird mit der Kamera 7, die auf der Seite des Smartphone- oder Tablet-Bildschirms positioniert ist, das Gesicht der zu authentifizierenden Person fotografiert oder gefilmt. Das Prüfsignal 5 ist ein Blitzlicht 8, welches zu einem oder mehreren bestimmten Zeitpunkten ausgesendet wird und prüft, ob das fotografierte oder gefilmte Objekt fälschlicherweise ein Foto 9 oder der Bildschirm 10 eines Wiedergabegerätes ist. Das Ansprechsignal ist das Licht, welches vom Objekt in Folge des Blitzlichts reflektiert wird.

Wenn das Objekt zum Beispiel fälschlicherweise eine größere Glasfläche aufweisen würde, könnte der Authentifizierungsserver 3 dies durch das reflektierte Licht erkennen. Wenn die authentische Person eine Brille trägt, sollte sie diese auch während des Enrollments tragen, damit der Effekt in das Soll-Ansprechsignal mit aufgenommen wird.

In einer weiteren Ausführung ist das oder ein biometrisches Merkmal 4 ein akustisch erfassbares Merkmal, insbesondere die Stimme der Person, und das Erfassungsgerät ein akustisches Aufnahmegerät. Als Prüfsignal wird ein Tonsignal ausgesandt.

In einer weiteren Ausführung ist das akustische Erfassungsgerät das Mikrofon 11 eines Smartphones oder Tablet.

In einer weiteren Ausführung ist das Prüfsignal 5 ein vom Lautsprecher 12 des Erfassungsgerätes abgegebenes Tonsignal in einer Resonanzfrequenz des authentischen Benutzers, welches prüft, ob das tongebende Objekt 1 fälschlicherweise ein Tonwiedergabegerät 13 ist.

In einer weiteren Ausführung berechnet der Authentifizierungsserver 3 die Resonanzfrequenzen des authentischen Benutzers im Rahmen der Stimmprofilbildung und verwendet sie als Prüfsignal 5.

In einer weiteren Ausführung wählt der Authentifizierungsserver 3 als Prüfsignale die Resonanzfrequenzen aus, die im Mundraum des Benutzers entstehen.

Wenn diese Prüfsignale in Form von Schallwellen auf den sprechenden Mund treffen, beginnen sie im Mundinneren in Resonanz zu schwingen, sich dadurch zu verstärken und als Ansprechsignal 6 verstärkt auf das Mikrofon 11 zurück zu treffen.

In einer weiteren Ausführung werden die Prüfsignale in Form von Schallwellen in Zeitintervallen ausgestoßen, die ein Vielfaches des Kehrwertes der gewählten Resonanzfrequenz darstellen und die Resonanzschwingung im Mund des authentischen Benutzers verstärken.

In einer weiteren Ausführung nimmt das Erfassungsgerät 2 ein Video vom Objekt 1 auf und der Authentifizierungsserver 3 verarbeitet das Video in optischer und akustischer Hinsicht.

Entsprechend der Kombination der beiden biometrischen Verfahren wird dazu passend als Prüfsignal 5 ein Licht- und/oder Tonsignal, insbesondere ein Lichtsignal und ein Tonsignal, ausgesandt und ein optisches oder akustisches Ansprechsignal, insbesondere ein optisches und ein akustisches Ansprechsignal, zur Authentifizierung verarbeitet. Das optische Prüfsignal kann ein Blitzlicht sein und das akustische Prüfsignal aus Resonanztönen der authentischen Person bestehen.

Der Versuch, den Authentifizierungsserver 3 mittels Kopien zu überlisten, hätte nur mit einer aufgenommenen Videosequenz vom authentischen Benutzer Erfolg. Die Wiedergabe in Richtung des Erfassungsgerätes müsste dagegen über die Glasscheibe eines Wiedergabegerätes erfolgen, die über das reflektierte Blitzlicht identifiziert würde.

Im Übrigen ist die Ausführung der Erfindung auch in einer Vielzahl von Abwandlungen der hier gezeigten Beispiele und weiter oben hervorgehobenen Aspekte der Erfindung möglich.

## Patentansprüche

1. Digitales Authentifizierungsverfahren zur Authentifizierung einer Person mittels mindestens eines biometrischen Merkmals, durch Vergleich einer gespeicherten Aufzeichnung des Merkmals oder eines aus einer Aufzeichnung abgeleiteten Soll-Parameters, mit einer aktuellen Aufnahme des Merkmals oder einem hieraus abgeleiteten Ist-Parameter, wobei
die aktuelle Aufnahme mittels eines Erfassungsgerätes ausgeführt wird, das vor oder während der Aufnahme ein Prüfsignal an das Objekt aussendet, das als die zu authentifizierende Person angenommen wird, und zusammen mit dem oder jedem biometrischen Merkmal des Objekts ein von dem Objekt im Ansprechen auf das Prüfsignal ausgesandtes Ansprechsignal aufnimmt, und
das Ansprechsignal mit mindestens einem Soll-Ansprechsignal verglichen und das Vergleichsergebnis zur Authentifizierung verarbeitet wird.

2. Authentifizierungsverfahren nach Anspruch 1, wobei das oder ein biometrisches Merkmal ein optisch erfassbares Merkmal, insbesondere das Gesicht, die Retina oder die Papillarstruktur einer Fingerspitze, der Person und das Erfassungsgerät eine Kamera ist, die als Prüfsignal ein Lichtsignal aussendet.

3. Authentifizierungsverfahren nach Anspruch 2, wobei das Lichtsignal ein Lichtblitz mit vorbestimmter Ausleuchtungs-Geometrie oder eine Lichtspur mit vorbestimmter zeitlicher Richtungsabhängigkeit der Aussendung eines Lichtflecks ist.

4. Authentifizierungsverfahren nach Anspruch 2 oder 3, wobei die Kamera die eingebaute Kamera eines Smartphones oder Tablet ist.

5. Authentifizierungsverfahren nach einem der vorangehenden Ansprüche, wobei das oder ein biometrisches Merkmal ein akustisch erfassbares Merkmal, insbesondere die Stimme der Person, und das Erfassungsgerät ein akustisches Aufnahmegerät ist und als Prüfsignal ein Tonsignal ausgesandt wird.

6. Authentifizierungsverfahren nach Anspruch 5, wobei das akustische Erfassungsgerät das Mikrofon eines Smartphones oder Tablet ist.

7. Authentifizierungsverfahren nach Anspruch 5 oder 6, wobei als Aufnahme eine Videoaufnahme des Objekts erzeugt und als Prüfsignal ein Licht- und/oder Tonsignal, insbesondere ein Lichtsignal und ein Tonsignal, ausgesandt und ein optisches oder akustisches Ansprechsignal, insbesondere ein optisches und ein akustisches Ansprechsignal, zur Authentifizierung verarbeitet wird.

8. Authentifizierungsanordnung zur Durchführung des Verfahrens nach einem der vorangehenden Ansprüche, aufweisend:
ein Erfassungsgerät zur Aufnahme mindestens eines biometrischen Merkmals einer zur authentifizierenden Person, zur Aussendung eines Prüfsignals und zur Erfassung eines Ansprechsignals und
einen Authentifizierungsserver zur Speicherung einer Aufzeichnung des biometrischen Merkmals und zur Vergleichs-Verarbeitung der Aufzeichnung mit einer aktuellen Aufnahme oder zur Ableitung eines aus der Aufzeichnung errechneten Soll-Parameters und dessen Vergleich mit einem aus der aktuellen Aufnahme abgeleiteten Ist-Parameter und zur Speicherung mindestens eines Soll-Ansprechsignals und dessen vergleichender Verarbeitung mit einem während der aktuellen Aufnahme gewonnenen Ist-Ansprechsignal sowie zur kombinierten Verarbeitung des Vergleichsergebnisses hinsichtlich des biometrischen Parameters und des Vergleichsergebnisses zwischen Soll-Ansprechsignal und Ist-Ansprechsignal und zur Ausgabe eines Authentifizierungssignals im Ergebnis der kombinierten Vergleichs-Verarbeitung.

9. Authentifizierungsanordnung nach Anspruch 8, wobei das Erfassungsgerät die Kamera und/oder das Mikrofon eines Smartphones oder Tablet aufweist, dessen Blitzlicht zur Ausgabe eines als Prüfsignal dienenden Blitzlicht-Signals mit vorbestimmter Zeitsteuerung und/oder dessen Tonsignalgenerator zur Ausgabe eines als Prüfsignal dienenden Tonsignals mit vorbestimmter Konfiguration und/oder Zeitsteuerung ausgebildet ist.

10. Authentifizierungsanordnung nach Anspruch 8 oder 9, wobei der Authentifizierungsserver ein Bildverarbeitungs- und -vergleichsprogramm zur Verarbeitung von Abbildern eines optisch erfassbaren biometrischen Merkmals und/oder einen Stimmerkennungs- und -verarbeitungsalgorithmus zur Gewinnung und zum Vergleich von Stimmprofilen einer menschlichen Stimme aus Sprachaufnahmen aufweist.

11. Authentifizierungsanordnung nach einem der Ansprüche 8 bis 10, wobei der Authentifizierungsserver eine Lichtverteilungs-Vergleichereinheit zum Vergleich der Lichtverteilung auf der aktuellen Aufnahme des Objekts mit Lichtverteilungen auf Soll-Erfassungsbildern aufweist.

12. Authentifizierungsanordnung nach einem der Ansprüche 8 bis 11, wobei der Authentifizierungsserver zum Vergleich von in einer aktuellen Sprachaufnahme auftretenden Tonsignalen als Ist-Ansprechsignal mit einem in einem Enrollmentverfahren gewonnenen Soll-Ansprechsignal ausgebildet ist.

13. Authentifizierungsanordnung nach einem der Ansprüche 8 - 12, wobei das Erfassungsgerät als Videoaufnahmegerät ausgebildet ist und
der Authentifizierungsserver zur Auswertung einer Videoaufnahme hinsichtlich mindestens eines darin vorkommenden Ansprechsignals, insbesondere eines optischen Ansprechsignals und eines akustischen Ansprechsignals, mit mindestens einem Soll-Ansprechsignal, insbesondere mit einem optischen und einem akustischen Soll-Ansprechsignal, ausgebildet ist.
